Europäisches Patentamt

European Patent Office

Office européen des brevets

(11) Publication number: **0 078 801**
**B1**

(12) **EUROPEAN PATENT SPECIFICATION**

(45) Date of publication of patent specification: **17.04.85**

(51) Int. Cl.⁴: **A 01 F 12/44**

(21) Application number: **81903240.0**

(22) Date of filing: **04.12.81**

(86) International application number:
**PCT/GB81/00261**

(87) International publication number:
**WO 82/02144 08.07.82 Gazette 82/17**

(54) **APPARATUS FOR SEPARATING GRAIN.**

<table>
<tr><td>

(30) Priority: **19.12.80 GB 8040734**

(43) Date of publication of application:
**18.05.83 Bulletin 83/20**

(45) Publication of the grant of the patent:
**17.04.85 Bulletin 85/16**

(84) Designated Contracting States:
**DE FR**

(56) References cited:
**WO-A-81/01939**
**FR-A- 606 518**
**GB-A- 243 524**
**GB-A- 619 735**
**GB-A-1 101 431**
**GB-A-1 184 542**
**US-A-3 785 134**

</td><td>

(73) Proprietor: **MASSEY-FERGUSON SERVICES N.V.**
**Abraham de Veerstraat 7A**
**Curaçao Netherlands Antilles (NL)**
(84) **DE**

(73) Proprietor: **MASSEY-FERGUSON S.A.**
**La Boursidiere, RN 186**
**F-92350 le Plessis Robinson (FR)**
(84) **FR**

(72) Inventor: **McNAUGHT, James Baillie**
**Les Clairières 126 Avenue de Flandre**
**Wasquehal (FR)**

(74) Representative: **Jones, David Bryn**
**Massey-Ferguson Stareton near Kenilworth**
**Warwickshire CV8 2LJ (GB)**

</td></tr>
</table>

Courier Press, Leamington Spa, England.

## Description

This invention relates to apparatus for separating grain from a mixture of grain and straw.

In our GB—A—1 101 431 we proposed apparatus comprising a conveyor capable of conveying a mixture of grain and straw in a generally horizontal direction to a discharge end, and a chute arranged so that said mixture discharged from the conveyor falls onto the chute. The chute has a floor that is imperforate to the passage of grain through it and downwardly inclined and projects beyond said discharge end in the feeding direction of the conveyor. A trough covered by a grille is provided at or adjacent to the lower end of the chute, and is adapted so that when the mixture of grain and straw passes down the chute, grain is collected by the trough and straw passes over it. A rotor may be provided above and adjacent the rear end of the chute and is driven so as to assist the discharge of material from the apparatus.

It has been found that this known apparatus increases the efficiency of a combine harvester by increasing the amount of grain separated from the straw. In particular, loosening of the straw as it falls from the conveyor releases grain from the straw, and it is this grain, that would otherwise be lost, that is collected.

An object of the present invention is to further improve the separating action of this known grain separating apparatus.

This object is achieved according to the invention by providing apparatus for separating grain from a threshed crop mixture of grain and straw comprising a conveyor capable of conveying threshed crop in a generally horizontal direction to a discharge end thereof, a chute fixedly mounted below the discharge end of the conveyor so as to be inclined downwards and rearwards therefrom to receive threshed crop and collect grain that falls from the straw as it is discharged from the conveyor, grain collecting means located at the lower end of the chute to collect grain, and a plurality of fingers connected to the discharge end of the conveyor so that each projects rearwards and downwards therefrom above the grain chute and has its rear end left free so as to support straw without impeding its flow as it is discharged.

The fingers therefore serve to support the straw momentarily as it passes off the end of the conveyor and allows the release of loose grain as the straw begins to fall. The downward inclination of the tines assists falling of the straw so that grain can more easily separate from it before it finally falls freely.

Preferably, the conveyor is of the type known as straw walkers comprising a number of longitudinally extending members that are provided with crop engaging formations along their upper edges and are oscillated longitudinally to move crop rearwards along their length. The tines are spaced across and project from the end of each straw walker so as to move with the straw walker and loosen the straw before it falls.

It will be appreciated that the invention is applicable to any grain separating apparatus including a conveyor from which straw falls, and means to collect grain that is released from the falling straw.

The invention will now be described by way of example with reference to the accompanying drawings in which:—

Figure 1 is a side elevation of a combine harvester fitted with grain separating apparatus according to the invention.

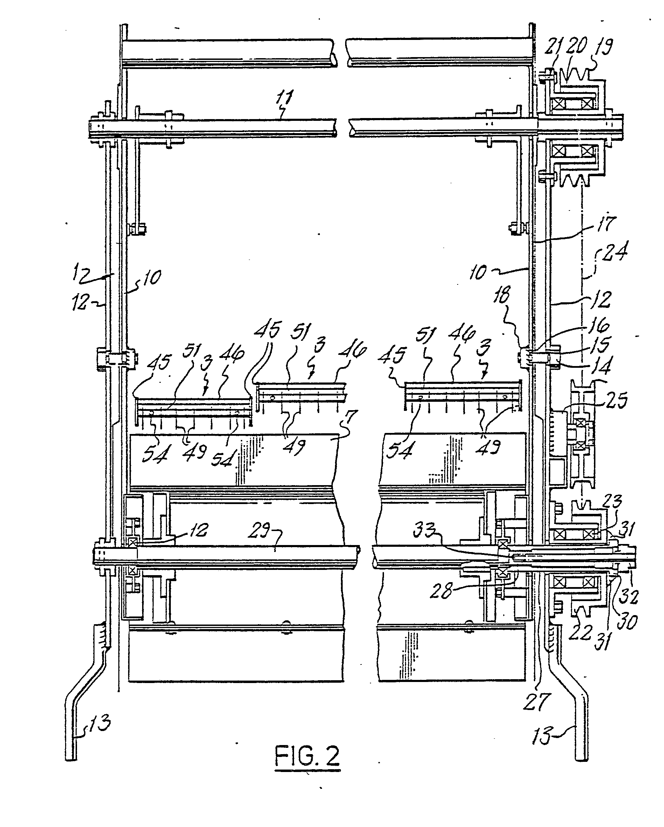

Figure 2 is a rear view of the apparatus of Figure 1,

Figure 3 is an elevation of the opposite side of the combine harvester to that shown in Figure 1, and

Figure 4 is a longitudinal section through the end of a straw walker in Figures 1 and 2.

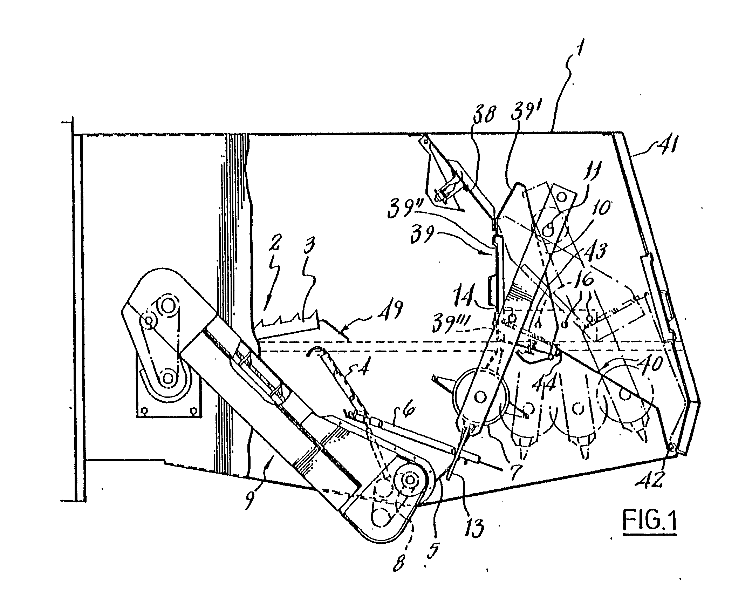

The drawings show the rear housing 1 of a combine harvester containing a straw walker mechanism 2 that receives crop from a crop threshing mechanism (not shown) and feeds it rearwards. Loose grain in the threshed crop material falls through the straw walkers 3 and is passed to a grain cleaning mechanism (not shown) while the straw passes over the end of the straw walkers 3 into a further grain separating mechanism comprising a chute 4 leading down to a trough 5 covered by a wire comb 6, and a rotor 7 provided adjacent the rear end of the chute 4. The straw falls onto the chute 4 and passes down over the wire comb 6 and is fed out of the housing 1 with the aid of the rotor 7 that is driven counterclockwise as seen in Figure 1. As the straw falls, loose grain is further released from the straw and passes through the comb 6 into the trough from where it is removed by a cross auger 8 and passes via a paddle elevator 9 to the grain cleaning mechanism.

The rotor 7 is carried between the lower ends of a pair of downwardly extending arms 10 that are pivotally connected to the housing 1 at their upper ends so as to allow the rotor to be swung backwards and forwards about the axis of shaft 11 between a number of different settings. Figure 1 shows the rotor in full lines in its forwardmost setting and in broken lines in its rearmost setting and intermediate settings.

An important function of the rotor is to ensure a uniform thickness of the material fed over the comb 6. Adjustment of the setting of the rotor relative to the comb allows this thickness to be adjusted for maximum grain separation as well as for crop bulk to avoid blockages.

A rotor adjustment arm 12 is connected to each end of shaft 11 on the outside of the housing side wall 17. The adjustment arm 12 extends downwards alongside the adjacent rotor support arm 10 and carries a handle 13 at its lower end by which the arms 10 and rotor 7 can be swung backwards and forwards to any desired setting. A releasable fastener 14 in the form of a screw is provided to secure the rotor in each of its settings, the screw 14 being inserted through an aperture 15 in the adjustment arm, one of a number of selected apertures 16 in the side wall 17 of the housing and engaging a nut 18 secured to the rotor support arm 10.

The rotor drive mechanism comprises a V-belt pulley 19 that is concentric with the shaft 11 and is supported by a bearing 20 connected through bolts 21 to the adjustment arm 12.

A V-belt pulley 22 is similarly supported at the lower end of the adjustment arm by a bearing 23 and a V-belt 24 couples both pulleys 19, 22 and is tensioned by a pulley 25 that is adjustably supported in a slotted guide 26 connected to the adjustment arm 12 between the two pulleys 19, 22.

A tubular spindle 27 is insertable through the lower pulley 22, and apertures in the adjustment arm 12, side wall 17 and rotor support arm 10, and is engageable over a drive spigot 28 on the end of the shaft 29 of the rotor. The spigot 28 is shaped to key with the spindle 27, and a shaped head 30 on the spindle keys between lugs 31 provided on the pulley 22. A screw 32 is insertable through the spindle 27 and engages a threaded hole 33 in the spigot 28 to retain the spindle in place.

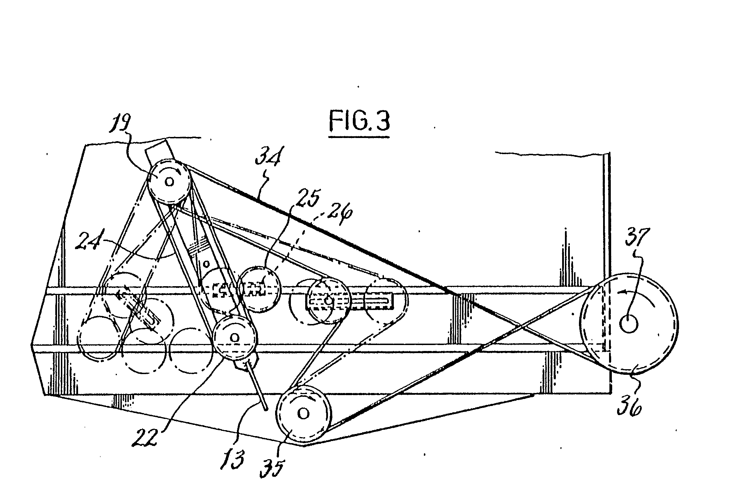

Figure 3 of the drawings is a side elevation showing the V-belt 24 passing over the pulleys 19, 22 and past the tensioner pulley 25. It also shows the input drive belt 34 that drives the upper pulley 19 and a pulley 35 connected to the grain collecting auger 8 and the elevator 9 associated with the grain collecting chute 5. The main drive pulley 36 is driven from the crankshaft 37 that operates the straw walkers 2.

A crop deflector arrangement is provided within the housing 1 above the rotor 7 so as to deflect crop downwards to the rotor and prevent it from passing out of the combine over the top of the rotor. This deflector arrangement is made adjustable to accommodate the different settings of the rotor and the feed crop to the rotor in each case. As shown in Figure 1, an upper fixed baffle 38 is provided that extends downwards and rearwards from the top of the housing, and two relatively foldable baffles 39 and 40 are provided between the fixed baffle 38 and the rear wall 41 of the housing. The upper baffle 39 is located so as to pivot and slide relative to the lower edge of the fixed baffle 38, and the lower baffle 40 is pivoted about a transverse axis 42 adjacent the lower edge of the wall 41. A tension spring 43 holds these two baffles 39 and 40 in pivoting sliding engagement at 44 as they move between different settings corresponding to those of the rotor. The baffle 39 is formed in three relatively angled sections 39', 39'' and 39''' so that the lower sections 39'', 39''' form a construction above the rotor in all of its settings. The upper section 39' lies above and behind the guide 38 in the forwardmost setting, and moves downwards and pivots rearwards to the rearmost setting. The lower baffle 40 simply swings rearwards towards the rear wall 41.

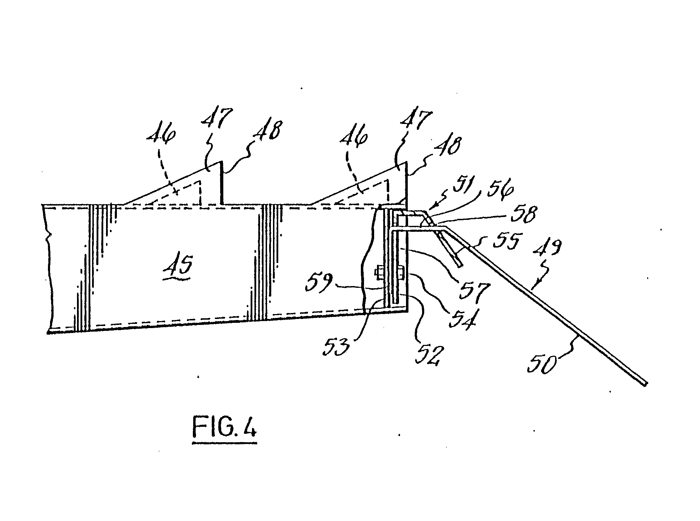

The straw walkers 3 are of substantially conventional construction and each comprise a pair of rearwardly extending vertical plates 45 arranged alongside one another and connected by a plurality of transverse ribs 46. A saw tooth is formed along the upper edges of the plates 45 and the ribs 46 are connected between the teeth 47 of the saw tooth and conform in cross-section to the general shape of the teeth, as shown in Figure 4. The rear edges 48 of the teeth and the ribs 46 engage the underside of the crop and feed it rearwards as the straw walkers are oscillated longitudinally by the action of the crank drive mechanism 37 on which the straw walkers are mounted.

The action of the straw in falling from the ends of the straw walkers 3 aids the release of the threshed grain from the straw, this grain being collected in the trough 5. In order to further assist release of the threshed grain from the straw, a plurality of elongate elements 49 such as wire fingers are provided that are spaced laterally across the end of each straw walker 3 and project rearwards beyond the end of the straw walkers above the chute 4. These fingers 49 are also inclined downwards, at least over their free end portions 50 and thus allow initial falling and loosening of the straw before it falls freely, thereby assisting release of the grain.

The fingers 49 are secured to the end of each straw walker 3 by a clamp plate 51 having a series of holes through which the fingers project so that they are located thereby. The clamp plate 51 is channel section and comprises a base portion 52 that is secured to the rear wall 53 of the straw walker by a pair of bolts 54, and a finger support portion 55 that extends rearwards and downwards from the top edge of the base portion 52. Each of the fingers 49 is formed with an intermediate portion 56 that projects through aligned holes 57, 58 in the base and support portions 52, 55 respectively, of the clamp plate so that it is supported at two spaced apart points along its length. An end portion 59 of each finger extends downwards at right angles to said intermediate portion 56 and is clamped between the base of the clamp plate and the rear wall of the straw walker. The other free end 50 of the finger, rearwards of the support portion 55, is angled downwards at an angle of substantially 45°.

In an alternative embodiment of the invention the rotor 7 may be fixed relative to the chute 4 as shown in the GB—A—1 101 431. In yet another embodiment the rotor 7 could be omitted altogether.

**Claims**

1. Apparatus for separating grain from a threshed crop mixture of grain and straw comprising a conveyor (3) capable of conveying threshed crop in a generally horizontal direction to a discharge end thereof, a chute (4) fixedly mounted below the discharge end of the conveyor so as to be inclined downwards and rearwards therefrom to receive threshed crop and collect grain that falls from the straw as it is discharged from the conveyor, and grain collecting means (5) located at the lower end of the chute to collect grain, characterised in that a plurality of fingers (49) are connected to the discharge end of the conveyor (3) so that each projects rearwards and downwards therefrom above the grain chute (4) and has its rear end left free so as to support straw without impeding its flow as it is discharged.

2. Apparatus as claimed in claim 1 in which the conveyor (3) comprises a straw walker and the fingers (49) are clamped to the end wall of the straw walker by a single clamp plate (51).

3. Apparatus as claimed in claim 2 in which the clamp plate (51) is of channel section and has a clamp portion (52) and a support portion (55) each formed with an aperture (57, 58) therein, through which a respective finger (49) projects so that it is supported at two spaced apart points along its length.

4. Apparatus as claimed in any one of the preceding claims in which each finger (49) is formed with an end portion (59) by which it is clamped in place and a projecting portion (56) that extends at an angle to said end portion.

5. Apparatus as claimed in any one of the preceding claims in which the grain collecting means (5) comprises a trough at the lower end of the chute (4) covered by a grille (6).

**Revendications**

1. Appareil pour séparer le grain d'un mélange battu de paille et de grain, comprenant un convoyeur (3) capable d'acheminer la récolte battue dans une direction sensiblement horizontale vers une extrémité d'évacuation dudit convoyeur, un couloir (4) monté fixe sous l'extrémité aval du convoyeur de façon à être incliné vers le bas et vers l'arrière à partir dudit convoyeur pour recevoir la récolte battue et recueillir le grain qui tombe de la paille à sa sortie du convoyeur, un organe récepteur de grain (5) disposé sous l'extrémité inférieur du couloir pour recueillir le grain, caractérisé en ce qu'une pluralité de doigts (49) sont reliées à l'extrémité aval du convoyeur (3) de façon que chaque doigt dépasse vers l'arrière et vers le bas du convoyeur au-dessus du couloir à grain (4) et ait son extrémité arrière libre de manière à supporter la paille sans freiner son écoulement lors de son évacuation.

2. Appareil suivant la revendication 1, dans lequel le convoyeur (3) comprend un secoueur, et les doigts (49) sont fixés à la paroi d'extrémité du secoueur par une plaque de serrage (51) unique.

3. Appareil suivant la revendication 2, dans lequel la plaque de serrage (51) a une section profilée et comporte une portion de serrage (52) et une portion de support (55) présentant chacune une ouverture (57, 58), dans lesquelles passe un doigt (49) de sorte que le doigt est supporté en deux points espacés de sa longueur.

4. Appareil suivant l'une quelconque des revendications précédentes, dans lequel chaque doigt (49) comprend une portion d'extrémité (59) par laquelle il est fixé en place et une portion saillante (56) qui forme un angle avec ladite portion d'extrémité.

5. Appareil suivant l'une quelconque des revendications précédentes, dans lequel l'organe récepteur de grain comprend à l'extrémité inférieure du couloir (4) un plateau (5) recouvert par une grille (6).

**Patentansprüche**

1. Vorrichtung zum Abscheiden der Körner aus einer Korn- und Strohmischung eines ausgedroschenen Erntegutes, welche aus einer das gedroschene Erntegut in einer im allgemeinen horizontalen Richtung zu ihrem Abwurfende transportierenden Fördereinrichtung (3), einer unterhalb des Abwurfendes der Fördereinrichtung befestigten und sich schräg nach unten und hinten erstreckenden Schütte (4) zum Aufnehmen des gedroschenen Erntegutes und zum Auffangen der aus dem von der Fördereinrichtung abgeworfenen Stroh herausfallenden Körner, sowie einer Kornsammeleinrichtung (5) am unteren Ende der Schütte zum Sammeln der Körner besteht, dadurch gekennzeichnet, dass eine Vielzahl von Fingern (49) am Abwurfende der Fördereinrichtung (3) angeordnet sind, die sich nach unten und hinten oberhalb des Schütte (4) erstrecken und ein freistehendes rückwärtiges Ende aufweisen, um das abgeworfene Stroh aufzunehmen, ohne dessen Durchfluss zu beeinträchtigen.

2. Vorrichtung nach Anspruch 1, dadurch gekennzeichnet, dass die Fördereinrichtung (3) aus einem Schüttler besteht und die Finger (49) mittels einer einzigen Klemmplatte (51) an seiner Rückwand eingespannt sind.

3. Vorrichtung nach Anspruch 2, dadurch gekennzeichnet, dass die Klemmplatte (51) einen U-förmigen Querschnitt aufweist und einen Klemmteil (52) und einen Stützteil (55) bildet, die jeder mit einer Öffnung (57, 58) versehen sind, durch die sich jeweils ein Finger (49) erstreckt, so dass dieser auf seiner Länge an zwei im Abstand voneinander liegenden Punkten abgestützt ist.

4. Vorrichtung nach einem der vorhergehenden Ansprüche, dadurch gekennzeichnet, dass jeder Finger (49) einen Endteil (59), durch den er in seiner Lage festgespannt wird, sowie einen vorstehenden Teil (56) aufweist, welcher gegenüber dem Endteil abgewinkelt ist.

5. Vorrichtung nach einem der vorhergehenden Ansprüche, dadurch gekennzeichnet, dass die Kornsammeleinrichtung aus einer am unteren Ende der Schütte (4) angeordneten Mulde besteht, welche mit einem Gitterrost (6) abgedeckt ist.

FIG.1

FIG. 2

FIG.3

FIG. 4